# EUROPÄISCHE PATENTSCHRIFT

(11) **EP 2 352 949 B1**
(45) Veröffentlichungstag und Bekanntmachung des Hinweises auf die Patenterteilung: **28.11.2012**
(21) Anmeldenummer: 10771318.2
(22) Anmeldetag: 31.08.2010
(51) Int. Cl.: F21K 2/00, B60Q 3/02, G09F 13/20, C09K 11/02

(54) **VERFAHREN ZUR HERSTELLUNG EINER FLUCHTWEGMARKIERUNG SOWIE EINE SOLCHE**
METHOD FOR PRODUCING AN ESCAPE ROUTE MARKING AND AN ESCAPE ROUTE MARKING
PROCÉDÉ DE FABRICATION D'UN MARQUAGE D'ISSUE DE SECOURS ET MARQUAGE D'ISSUE DE SECOURS

(30) Priorität: 01.09.2009 DE 102009040042
(43) Veröffentlichungstag der Anmeldung: 10.08.2011
(73) Patentinhaber: Lufthansa Technik AG, 22335 Hamburg (DE)
(72) Erfinder: SUTTER, Wolfgang, 25469 Halstenbek (DE)
(74) Vertreter: Hauck Patent- und Rechtsanwälte
(86) Internationale Anmeldenummer: PCT/EP2010/005327
(87) Internationale Veröffentlichungsnummer: WO 2011/026598

(56) Entgegenhaltungen:
- EP-A1- 1 783 000
- WO-A1-96/33093
- WO-A1-98/04645
- WO-A1-2008/110344
- DE-U1-202007 010 221

## Beschreibung

Die vorliegende Erfindung betrifft ein Verfahren zur Herstellung einer Fluchtwegmarkierung sowie eine Fluchtwegmarkierung.

Es ist bekannt, zur Markierung von Fluchtwegen in Flugzeugen photolumineszente Streifen am Boden des Flugzeuginnenraums anzuordnen. Photolumineszenz wird gelegentlich auch als Nachleuchten und/oder als Phosphorisieren bezeichnet. Die sicherheitstechnischen Anforderungen an die Fluchtwegmarkierung sind beispielsweise in der deutschen Industrienorm DIN 67510 spezifiziert. Die Streifen werden am Boden der Flugzeugkabine verlegt und weisen den Passagieren und der Besatzung im Notfall den Weg zu den Ausgängen und Notausstiegen. In der Vergangenheit haben sich bei der Ausstattung von Flugzeugen und Flugzeugkabinen zunehmend photolumineszente Streifen als Fluchtwegmarkierung durchgesetzt, da diese ausfallsicher sind und ohne Stromversorgung betrieben werden können.

Aus EP 0 489 561 A1 ist eine dauerhaft fluoreszierende Lage bekannt, bei der Farbpigmente in eine Polymermatrix eingebunden sind. Hierbei kann das fluoreszierende Material in einem Träger eingebunden sein, der dem Fluoreszenzlicht durch zusätzliche Filter verschiedene optische Eigenschaften verleiht.

Aus US 2002/0015309 A1 ist ein Notbeleuchtungssystem für ein Flugzeug bekannt, bei dem photolumineszentes Material in einer geschlossenen Ummantelung angeordnet ist. Die Ummantelung wird in einem Presssitz zwischen zwei parallel zueinander verlaufenden Schienen am Boden des Flugzeugs gehalten. Das photolumineszente Material wird in die Ummantelung eingeschoben, die endseitig durch einen Deckel verschlossen wird.

Aus WO 01/52224 A1 ist eine Notfallbeleuchtung für ein Flugzeug bekannt, bei dem Fluchtwegmarkierungen in Form von Einsätzen, selbstklebenden Bändern und Farbe im Flugzeuginnenraum verwendet wird.

Aus EP 0 828 657 B1 ist eine Notbeleuchtungseinheit für den Flugzeuginnenraum bekannt, die über ein direkt mit dem Flugzeugboden verbundenes Abdeckelement in Position gehalten wird.

Aus US 7,074,345 B2 ist ein photolumineszentes Material bekannt, das aus einer Mischung eines transparenten Basismaterials und photolumineszenter Pigmente hergestellt wird, wobei bei 20°C die Viskosität des transparenten Basismaterials 1 Pa.s oder mehr beträgt und photolumineszente Pigmente in einer Menge von 7 bis 95 Gew.- % zugesetzt werden. Für die Verwendung von Silikonmaterial als transparentem Basismaterial wird eine Viskosität von 70 Pa.s und eine mittlere Teilchengröße von 150 µm für die photolumineszenten Pigmente vorgeschlagen.

Neben einer ausreichenden Leuchtkraft ist für den Einsatz einer Fluchtwegmarkierung in der Flugzeugkabine entscheidend, dass diese den Belastungen im Flugzeuginnenraum sowohl durch die Passagiere als auch durch Spannungen, die durch den Flugzeugboden in die Fluchtwegmarkierung eingebracht werden, standhalten.

Aus WO 96/33093 ist eine Fluchtwegmarkierung für ein Flugzeug bekannt geworden, bei der ein photolumineszenter Streifen unter einer Trittschutzabdeckung angeordnet ist.

Aus WO 98/04645 ist ein Silikongummi bekannt geworden, das photolumineszente Pigmente mit einer Konzentration von 0,1 bis 10 Gewichtsprozent enthält.

Der Erfindung liegt die Aufgabe zugrunde, eine Fluchtwegmarkierung mit einer möglichst guten Leuchtdichte bereitzustellen, die für den Einsatz im Flugzeuginnenraum robust ausgebildet ist.

Erfindungsgemäß wird die Aufgabe durch ein Verfahren mit den Merkmalen aus Anspruch 1 gelöst. Ebenso löst die Fluchtwegmarkierung mit den Merkmalen aus

Anspruch 10 diese Aufgabe. Vorteilhafte Ausgestaltungen der Erfindung bilden den Gegenstand der Unteransprüche.

Das erfindungsgemäße Verfahren dient zur Herstellung einer Fluchtwegmarkierung für ein Flugzeug mit einer im Dunkeln nachleuchtenden Leuchtschicht und einem Profil, das zwei miteinander verbindbare Profilelemente aufweist, wobei in einem ersten der Profilelemente die Leuchtschicht in einer sich in Längsrichtung erstreckenden Ausnehmung angeordnet ist, gekennzeichnet durch
- Herstellen der Leuchtschicht aus einer Mischung eines Silikonmaterials und von photolumineszenten Pigmenten,
- Einbringen der Mischung in einem flüssigen Zustand in die Aufnahme des ersten Profilelements, wobei die Mischung in der Aufnahme unter Vernetzung mit den Wänden in dem Profilelement aushärtet.

Bei dem erfindungsgemäßen Verfahren erfolgt eine kraftschlüssige, bevorzugt eine stoffschlüssige Verbindung zwischen dem Profilelement, das die Leuchtschicht aufnimmt und der Leuchtschicht selbst. Hierdurch wird sichergestellt, dass das Profilelement eine ausreichende Stabilität besitzt und Risse in dem Profil vermieden werden können. Andererseits erlaubt das Einbringen der Mischung im flüssigen Zustand in die Aufnahme sowie das Aushärten der Mischung mit den photolumineszenten Pigmenten in der Aufnahme, Silikonmaterialien einzusetzen, die eine geringe Viskosität besitzen und sich für ein Einschieben in ein Hohlprofil wegen ihrer Steifigkeit nicht eignen. Erfindungsgemäß ist das zweite Profilelement zu einer Verbindung mit dem Untergrund vorgesehen. Dies bedeutet, dass das Profilelement, in das die Leuchtschicht eingebracht worden ist, dasjenige Profilelement ist, durch das die Leuchtschicht in der eingebauten Position sichtbar ist. Selbstverständlich ist das erste Profilelement mindestens teilweise transparent ausgebildet, so dass das Licht der Leuchtschicht wahrgenommen werden kann. Erfindungsgemäß erfolgt die Herstellung der Fluchtwegmarkierung "über Kopf", in dem die Mischung in das erste Profilelement eingebracht wird, das im eingebauten Zustand die abstrahlende Oberseite der Fluchtwegmarkierung bildet.

In einer bevorzugten Ausgestaltung der Erfindung besitzt das Silikonmaterial bei einer Temperatur von 20°C eine Viskosität von weniger als 9,5 Pa·s besitzt und die mittlere Korngröße der Pigmente kleiner als 150 µm, wobei der Anteil der Pigmente 50 bis 90 Gew.-% in der Mischung beträgt. Die Verwendung von einem dünnflüssigen Silikonmaterial erlaubt es, Pigmente mit einer kleinen mittleren Korngröße einzusetzen und so ausreichend Leuchtkraft zu erzielen. Insbesondere, da bei dem erfindungsgemäßen Verfahren die Leuchtschicht in flüssiger Form in das erste Profilelement eingebracht wird, ist es möglich, mit dünnflüssigen, niedrig, viskosen Silikonmaterialien zu arbeiten und diese mit Pigmenten zu versetzen, die eine möglichst kleine mittlere Korngröße besitzen.

In einer Ausgestaltung des Verfahrens wird die Mischung zum Einbringen in die Aufnahme gegossen. Der Gießvorgang kann direkt in das ausgelegte Profilelement erfolgen, wobei die eingebrachte Mischung dann selbständig oder mit einer Streichhilfe verteilt die Aufnahme in dem Profilelement gleichmäßig ausfüllt. Der Vorteil des Vergießens der Mischung in der Aufnahme liegt darin, dass eine gleichmäßige Dicke der Leuchtschicht erzielt werden kann. Auch ist sichergestellt, dass sich eine kontinuierliche Leuchtschicht bildet und die Leuchtschicht ohne Blasen oder Hohlräume an dem Profilelement anliegt. Alternativ ist es auch möglich, dass die Mischung beispielsweise über eine Düse oder eine Schnecke fortlaufend in das ausgelegte Profilelement eingespritzt oder in dieses extrahiert wird.

In einer bevorzugten Ausgestaltung des erfindungsgemäßen Verfahrens wird nach Aushärten der Mischung die Leuchtschicht durch Verbindung des ersten Profilelements mit dem zweiten Profilelement abgedeckt. Die Abdeckung des ersten Profilelements schützt die Leuchtschicht vor Feuchtigkeit und mechanischen Belastungen.

In einer bevorzugten Weiterführung erfolgt die Verbindung von dem ersten und zweiten Profilelement durch Verkleben und/oder durch Verschweißen der Profilelemente. Alternativ oder zusätzlich ist es auch möglich, das erste und das zweiten Profilelement kraftschlüssig, bevorzugt formschlüssig miteinander zu verbinden. Dies kann durch Vorsprünge oder Rastelemente in den Profilelementen erfolgen.

In einer bevorzugten Ausgestaltung werden zumindest die Innenwände in dem ersten Profilelement einer Oberflächenbehandlung unterworfen, bevor das Gemisch in die Ausnehmung eingebracht wird. Die Oberflächenbehandlung dient dazu, die Vernetzung des Silikonmaterials mit dem Wandmaterial des ersten Profilelements zu fördern. Für die Oberflächenbehandlung wird bevorzugt eine Infrarot-Bestrahlung eingesetzt, die nach dem Einbringen des Silikonmaterials auf das erste Profilelement und das Silikonmaterial gerichtet wird.

Als zweckmäßig für die Oberflächenbehandlung hat sich auch eine FlammBehandlung des ersten Profilelements herausgestellt. Diese kann zusätzlich oder alternativ zu der Infrarot-Bestrahlung erfolgen. Ebenso können Primer und/oder eine Plasmastrahlbehandlung für das erste Profilelement eingesetzt werden, um die Oberfläche für eine bessere Vernetzung mit der flüssigen oder aushärtenden Mischung vorzubereiten.

Die Erfindung wird ebenfalls durch eine Fluchtwegmarkierung gemäß den Merkmalen aus Anspruch 10 gelöst. Die erfindungsgemäße Fluchtwegmarkierung für ein Flugzeug besitzt eine im Dunklen nachleuchtende Leuchtschicht und ein Profil, dass zwei miteinander verbindbare Profilelemente aufweist, wobei die Leuchtschicht in einer Aufnahme des ersten Profilelements angeordnet ist. Die Leuchtschicht besteht aus einem Silikonmaterial mit photolumineszenten Pigmenten und ist kraftschlüssig, bevorzugt stoffschlüssig mit dem ersten Profilelement verbunden. Die kraftschlüssige und insbesondere die stoffschlüssige Verbindung zwischen Leuchtschicht und Profilelement hilft das Profilelement zu stabilisieren. Darüber hinaus kann die Oberfläche des ersten Profilelements leicht konvex ausgebildet sein, so dass Flüssigkeiten von diesem abfließen. So können beispielsweise Spannungsrisse in dem ersten Profilelement vermieden werden, die durch Reinigungsflüssigkeit induziert werden.

Bevorzugt besteht das erste Profilelement aus einem transparenten Kunststoffinaterial, wobei das transparente Kunststoffmaterial auch eingefärbt sein kann, um eine Farbe zu erhalten, die von der Farbe verschieden ist, mit der die Leuchtschicht nachleuchtet.

In einer bevorzugten Ausgestaltung besitzt das erste Profilelement eine sich in Längsrichtung erstreckende Ausnehmung, die über zwei parallel zueinander verlaufende seitliche Stege begrenzt ist. Die seitlichen Stege grenzen einerseits an die seitliche Ausnehmung, um das Gemisch im flüssigen Zustand einzufüllen und andererseits können sie eine Verbindung zwischen erstem und zweitem Profilelement unterstützen.

Das zweite Profilelement besitzt bevorzugt eine sich in Längsrichtung erstreckende Ausnehmung, in der die mit dem ersten Profilelement verbundene Leuchtschicht eintaucht, wenn das erste und zweite Profilelement miteinander verbunden sind. Hierbei dient die Ausnehmung des zweiten Profilelements als Aufnahme für die Leuchtschicht, die an einer Ausnehmung des ersten Profilelements befestigt ist.

Bevorzugte Ausgestaltungen der Erfindung werden nachfolgend anhand der Figuren näher erläutert. Es zeigt:
- Fig. 1: eine erfindungsgemäße Fluchtwegmarkierung im Querschnitt, bei der die Aufnehmung für die Leuchtschicht durch seitliche Stege begrenzt ist,
- Fig. 2: eine zweite Ausgestaltung der erfindungsgemäßen Fluchtwegmarkierung, bei der eine formschlüssige Verbindung zwischen den Profilelementen über Stege erfolgt,
- Fig. 3: eine dritte Ausgestaltung, bei der die Profilelemente über eine formschlüssige Verbindung miteinander verbunden sind,
- Fig. 4: eine vierte Ausgestaltung, bei der die Profilelemente in ihren Seitenabschnitten miteinander verbunden sind und
- Fig. 5: eine schematische Ansicht der Produktion der erfindungsgemäßen Fluchtwegmarkierung.

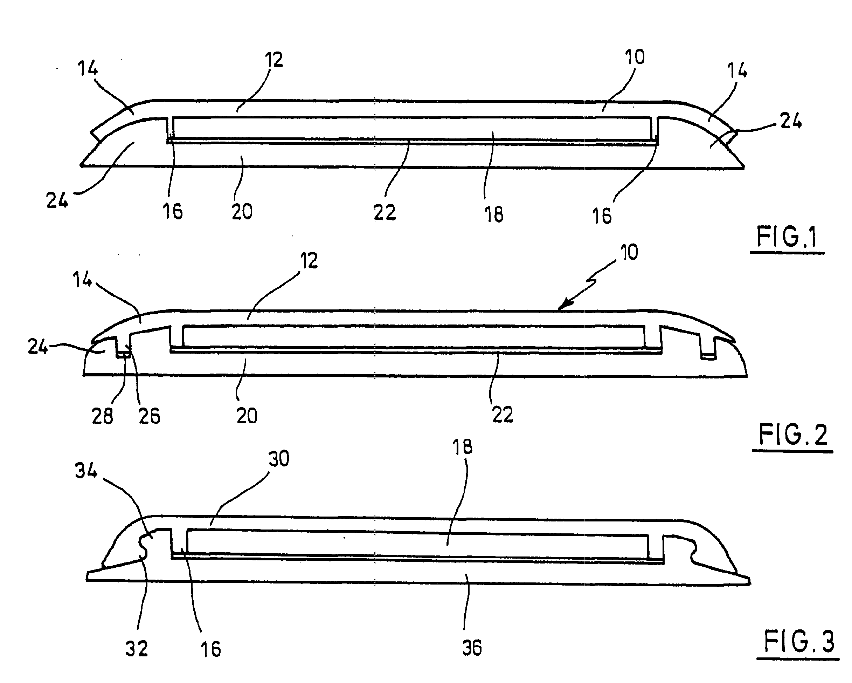

Fig. 1 zeigt ein erstes Profilelement 10, das einen flachen Grundabschnitt 12 sowie zwei seitlich abgewinkelte Seitenabschnitte 14 besitzt. Im Übergang zwischen Grundabschnitt 12 und Seitenabschnitt 14 sind zwei Stege 16 vorgesehen, die sich in Längsrichtung des Profilelements kontinuierlich erstrecken. Das freie Ende des Seitenbereichs 14 endet ungefähr auf der Höhe des freien Endes der Stege 16, so dass die äußere Kante des Seitenbereichs und das freie Ende der Stege in einer Ebene liegen.

Die von dem Grundabschnitt 12 und den Stegen 16 gebildete Aufnahme des ersten Profilelements 10 wird mit der Leuchtschicht 18 ausgegossen. Die Leuchtschicht 18 wird im flüssigem Zustand kontinuierlich in das Profilelement gegossen und härtet in diesem aus. Mit dem Aushärten der Leuchtschicht in dem Profilelement gehen die Materialien eine Verbindung ein, die die Leuchtschicht in dem Profilelement mit einer Verbindungskraft hält. Diese Verbindungskraft beruht auf einem Stoffschluss. Durch eine Oberflächenbehandlung der Aufnahme vernetzt das Silikonmaterial beim Aushärten mit dem Material der Profilschiene. Es wird bevorzugt nur eine Schicht des Silikonmaterials in die Profilschiene eingebracht. Eine Verwendung von mehreren Schichten von Silikonmaterial ist nicht erforderlich, da durch ein erfindungsgemäßes Einstellen der Viskosität und der Korngröße der Pigmente erreicht werden kann, dass die Pigmente sich nicht unvorteilhaft auf dem Boden der Leuchtschicht absetzen, sondern vorteilhafter Weise im Wesentlichen gleichmäßig verteilt im Silikon vorliegen. Die Profilschiene ist bevorzugt aus einem Polycarbonatmaterial hergestellt (PC). Das erste Profilelement 10 mit der ausgehärtete Leuchtschicht 18 wird mit dem zweiten Profilelement 20 verbunden. Das zweite Profilelement 20 besitzt eine Ausnehmung 22, die durch Seitenabschnitte 24 begrenzt ist. Die Kontur der Seitenabschnitte 24 entspricht in ihrem Verlauf den gebogenen Seitenabschnitten 14, so dass das erste Profilelement 10 flächig an dem zweiten Profilelement 20 anliegt. Das zweite Profilelement 20 besitzt eine glatte Unterseite und kann zusätzlich mit Mitteln zur Verbindung mit dem Untergrund ausgestattet sein. Als Material für das zweite Profilelement 20 kann ebenfalls ein PC-Kunststoff vorgesehen sein. Im Gegensatz zu dem ersten Profilelement 10 ist es nicht notwendig, dass das zweite Profilelement 20 transparent oder durchscheinend ausgebildet ist.

Die Ausnehmung 22 im zweiten Profilelement 20 ist so bemessen, dass eine kraftschlüssige Verbindung zwischen den Stegen 16 und der Innenseiten der Seitenabschnitte 24 erfolgt.

Zusätzlich zu der kraftschlüssigen Verbindung kann vorgesehen sein, dass die Seitenabschnitte 16 mit den Seitenabschnitten 24 des anderen Profilelements stoffschlüssig, also beispielsweise verklebt oder verschweißt sind.

In Fig. 2 ist der Seitenabschnitt 14 zusätzlich mit einem Steg 26 versehen. Der Seitenabschnitt 24 des zweiten Profilelements 20 weist zudem eine Ausnehmung 28 auf, in der der Steg 26 angeordnet ist. Wie bereits bei der im Zusammenhang mit Fig. 1 geschilderten Verbindung können zusätzlich Stege 16 klemmend in der Ausnehmung 28 sitzen. Auch können diese verklebt sein.

Fig. 3 zeigt eine Ausgestaltung, bei der ein erstes Profilelement 30 mit einer Schnappverbindung an dem zweiten Profilelement 36 befestigt ist. Wie in den in Bezug auf Fig. 1 und Fig. 2 gezeigten Varianten ist das erste Profilelement 30 mit einer durch Stege 16 begrenzten Aufnahme ausgestattet, die von einer Leuchtschicht 18 ausgegossen ist. Der Seitenbereich des ersten Profilelements 30 besitzt einen Vorsprung 32, der eine Schnappnase 34 des zweiten Profilelements 36 hintergreift.

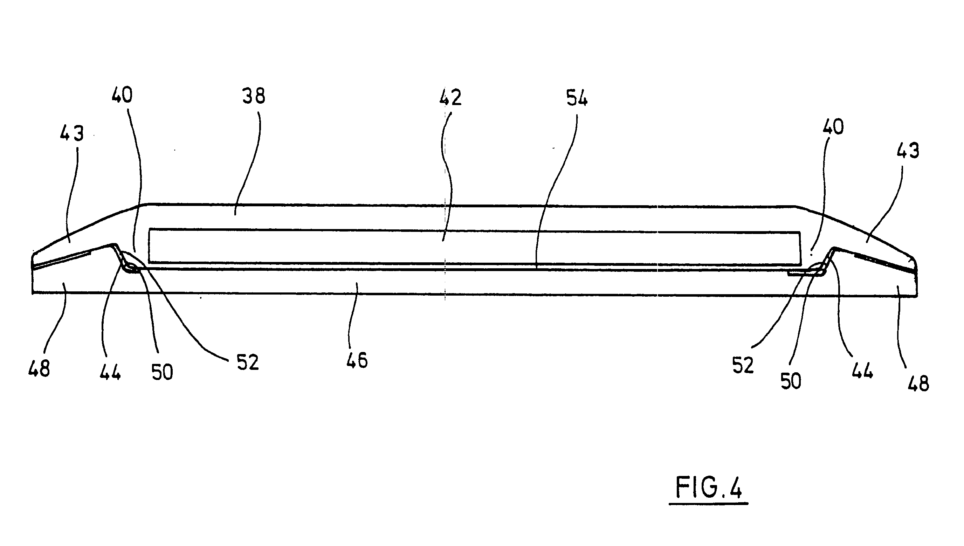

Fig. 4 zeigt eine weitere Ausgestaltung, bei der ein erstes Profilelement 38 Stege 40 aufweist, die die Ausnehmung zur Aufnahme der Leuchtschicht 42 seitlich begrenzen. Die Stege 40 besitzen an ihrer zu den Seitenabschnitten 43 weisenden Seite eine abgeschrägte Seitenwand 44. Das zweite Profilelement 46 besitzt eine zweite Ausnehmung, in die die Stege 40 mit der Leuchtschicht 42 eintauchen. Die zweite Ausnehmung wird seitlich durch einen Seitenabschnitt 48 begrenzt, der eine abgeschrägte Seitenwand 50 aufweist. Zwischen den Seitenwänden 44 und 50 befindet sich ein Luftspalt 52, der sich auch unter das freie Ende des Stegs 40 erstreckt. Der Luftspalt erlaubt die Verbindung der Stegelemente 38 und 46 mit einer ausreichenden Fertigungstoleranz. Zudem gibt der Luftspalt 52 dem Stegelement 38 ausreichend Spiel, wenn dieser von oben belastet wird.

Zwischen der Leuchtschicht 42 und dem zweiten Profilelement 46 ist eine Reflexionsschicht 54 vorgesehen, die beispielsweise in weißer Farbe ausgebildet ist und das Licht aus der Leuchtschicht in diese zurückwirft. Eine solche Reflexionsschicht kann auch in den Ausgestaltungen aus den Fign. 1 bis 3 vorgesehen sein.

Die Seitenabschnitte 48 und 43 sind stoffschlüssig durch Verklebung und/oder Verschweißen miteinander verbunden. Zum Verkleben kann beispielsweise auch ein doppelseitiges Klebeband vorgesehen sein.

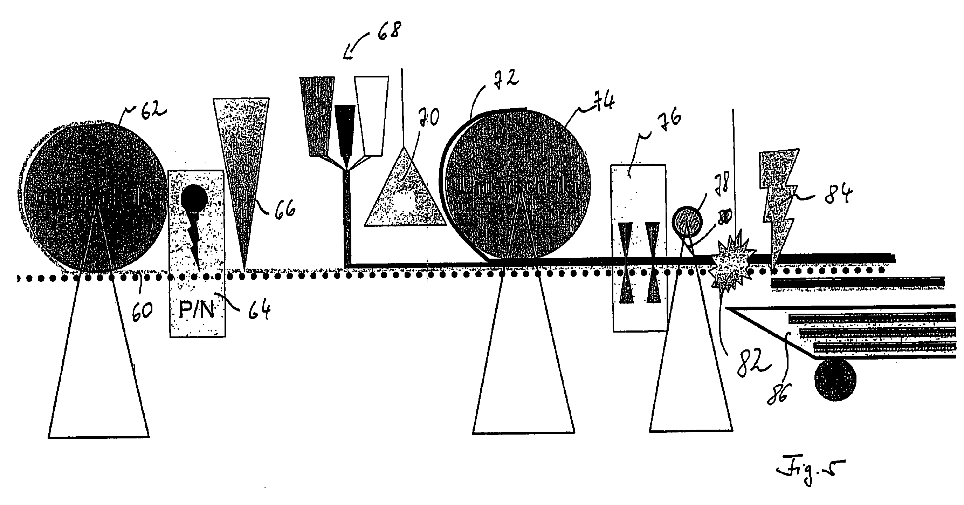

Das Herstellungsverfahren wird nachfolgend in Fig. 5 näher erläutert.

Am linken Rand der Fig. 5 ist das erste Profilelement 60 dargestellt, das von einer Trommel 62 kontinuierlich abgewickelt wird. Das als Oberschale ausgebildete erste Profilelement 60 kann bei dem in Fig. 5 dargestellten Herstellungsverfahren als endloses Profilelement verarbeitet werden. In einem nachfolgenden Schritt 64 wird das Profilelement 60 mit Laserlicht bestrahlt. Hierzu kann ein Beschriftungslaser mit einer relativ niedrigen Leistung eingesetzt werden, der dazu dient, eine Teilenummer oder eine sonstige Kennzeichnung aufzubringen. In einem nachfolgenden Schritt 66 erfolgt eine Beflammung der in dem ersten Profilelement vorgesehenen Aufnahme für das Silikonmaterial. Durch die Beflammung wird das erste Profilelement für eine nachfolgende Aufnahme der Silikonmischung vorbereitet. In einem Verfahrensschritt 68 wird die Silikonmischung in das erste Profilelement 60 eingebracht. Die Silikonmischung wird im Wesentlichen flüssig eingebracht, wobei durch Einstellen der Viskosität der Silikonmischung ein zu starkes Durchsacken oder Absetzen der Pigmente vermieden wird. In einem nachfolgenden Schritt 70 erfolgt eine Infrarot-Bestrahlung der in das erste Profilelement eingebrachten Silikonmischung. Hierdurch wird eine gute Vorvernetzung des Silikonmaterials in dem ersten Profilelement 60 erzielt, wodurch sich die Formstabilität der Leuchtschicht vergrößert. Die Infrarot-Bestrahlung kann dabei, wie in Fig. 5 dargestellt, direkt auf die Silikonmischung erfolgen. Alternativ oder zusätzlich ist es auch möglich, die in Schritt 68 eingebrachte Silikonmischung durch das transparente erste Profilelement hindurch der Infrarot-Bestrahlung auszusetzen. In einem nachfolgenden Verfahrensschritt wird das zweite Profilelement 72 von einer Trommel 74 abgewickelt. Das zweite Profilelement 72 wird über das erste Profilelement 60 aufgebracht und verschließt dieses. Sofern vorgesehen sein sollte, dass eine zusätzliche Reflektorschicht zwischen Leuchtstreifen und zweitem Profilelement eingebracht werden soll, so kann diese zusätzliche Reflektorschicht zwischen den Arbeitsschritten 70 und 72 eingebracht werden.

In einem nachfolgenden Arbeitsschritt 76 erfolgt eine Verschweißung der beiden Profilelemente 60 und 72. Bei der Verschweißung 76 der Profilelemente kann mit einem stationären Laser gearbeitet werden, der die Profilelemente entlang ihrem Rand kontinuierlich miteinander verschweißt.

In einem nachfolgenden Verfahrensschritt 78 wird ein kontinuierlicher Klebestreifen 80 auf die Oberseite des zweiten Profilelements 72 aufgebracht. Der Klebestreifen 80 kann beispielsweise in Form eines doppelseitig klebenden Streifens ausgebildet sein, über den nach Entfernen einer Schutzfolie von der Klebefläche die fertiggestellte Fluchtwegmarkierung auf den Untergrund geklebt werden kann.

In einem nachfolgenden Schritt 82 erfolgt eine automatische Qualitätskontrolle. Die automatische Qualitätskontrolle 82 erfolgt kontinuierlich und fortlaufend während der Produktion. Die Qualitätskontrolle 82 kann beispielsweise optisch die Schweißnähte zwischen dem ersten und dem zweiten Profilelement, die Dicke des eingebrachten Silikonmaterials oder die Anordnung des Klebestreifens 80 kontrollieren.

In einem nachfolgenden Verfahrensschritt 84 werden die kontinuierlich hergestellten Fluchtwegmarkierungen in eine vorbestimmte Länge gebracht, um über einen Wagen 86 dann abtransportiert zu werden.

Das vorstehend beschriebene Verfahren, bei dem die Verbindung der Profilelemente durch einen statischen Laser erfolgt, an dem das Werkstück sich kontinuierlich vorbeibewegt, erlaubt eine kontinuierliche Endlosfertigung einer Fluchtwegmarkierung. Hierdurch entsteht der Vorteil, dass bei der Produktion bereits die Fluchtwegmarkierungen in unterschiedlicher Länge hergestellt werden können, um so die für den späteren Einbau gewünschte Länge der Fluchtwegmarkierung bereitzustellen.

## Patentansprüche

1. Verfahren zur Herstellung einer Fluchtwegmarkierung für ein Flugzeug mit einer im Dunkeln nachleuchtenden Leuchtschicht und einem Profil, das zwei miteinander verbindbare Profilelemente aufweist, wobei in einem ersten der Profilelemente die Leuchtschicht in einer sich in Längsrichtung erstreckenden Ausnehmung angeordnet und das zweite Profilelement zu einer Verbindung mit einem Untergrund vorgesehen ist, wobei das Verfahren folgende Schritte aufweist:
- Herstellen der Leuchtschicht aus einer Mischung eines Silikonmaterials und von photolumineszenten Pigmenten, und
- Einbringen der Mischung in einem flüssigen Zustand in die Ausnehmung des ersten Profilelements, wobei die Mischung in der Aufnahme unter Vernetzung mit den Wänden in dem Profil aushärtet.

2. Verfahren nach Anspruch 1, **dadurch gekennzeichnet, dass** die Viskosität des Silikonmaterials weniger als 9,5 Pa.s [20°C] und die mittlere Korngröße der Pigmente kleiner als 150 µm ist und der Anteil der Pigmente 50 - 90 Gew.-% in der Mischung beträgt.

3. Verfahren nach Anspruch 1 oder 2, **dadurch gekennzeichnet, dass** die Mischung zum Einbringen in die Ausnehmung gegossen wird.

4. Verfahren nach einem der Ansprüche 1 bis 3, **dadurch gekennzeichnet, dass** nach Aushärten der Mischung die Leuchtschicht durch Verbindung von erstem und zweitem Profilelement abgedeckt wird.

5. Verfahren nach einem der Ansprüche 1 bis 4, **dadurch gekennzeichnet, dass** das erste und zweite Profilelement stoffschlüssig und/oder formschlüssig miteinander verbunden werden.

6. Verfahren nach einem der Ansprüche 1 bis 5, **dadurch gekennzeichnet, dass** die Innenwände in dem ersten Profilelement einer Oberflächenbehandlung unterworfen werden, bevor die Mischung in die Ausnehmung eingebracht wird.

7. Verfahren nach Anspruch 6, **dadurch gekennzeichnet, dass** als Oberflächenbehandlung eine Flammbehandlung durchgeführt wird.

8. Verfahren nach einem der Ansprüche 1 bis 7, **dadurch gekennzeichnet, dass** das erste und zweite Profilelement durch einen stationären Laser verschweißt werden.

9. Fluchtwegmarkierung für ein Flugzeug mit einer im Dunkeln nachleuchtenden Leuchtschicht und einem Profil, das zwei miteinander verbindbare Profilelemente aufweist, wobei die Leuchtschicht in einer Ausnehmung des ersten Profilelements angeordnet ist, **dadurch gekennzeichnet, dass** die Leuchtschicht aus einem Silikonmaterial mit photolumineszenten Pigmenten besteht und stoffschlüssig mit dem ersten Profilelement verbunden ist und das zweite Profilelement zu einer Verbindung mit einem Untergrund vorgesehen ist.

10. Fluchtwegmarkierung nach Anspruch 9, **dadurch gekennzeichnet, dass** das erste Profilelement aus einem transparenten Kunststoffmaterial besteht.

11. Fluchtwegmarkierung nach Anspruch 9 oder 10, **dadurch gekennzeichnet, dass** das erste Profilelement eine sich in Längsrichtung erstreckende Ausnehmung aufweist, die über zwei parallel zueinander verlaufende seitliche Stege (16) begrenzt ist.

12. Fluchtwegmarkierung nach einem der Ansprüche 9 bis 11, **dadurch gekennzeichnet, dass** auch das zweite Profilelement eine sich in Längsrichtung erstreckende Ausnehmung aufweist, in der die mit dem ersten Profilelement verbundene Leuchtschicht eintaucht, wenn erstes und zweites Profilelement miteinander verbunden sind.

## Claims

1. A method for producing an escape route marking for an airplane comprising a luminous layer that luminesces in the dark, and a profile having two profile elements that can be connected to each other, wherein in a first of the profile elements, the luminous layer is arranged in a recess extending in the longitudinal direction, and the second profile element is provided to be connected with a base, wherein the procedure comprises the following steps:
- The production of the luminous layer from a mixture of a silicone material and from photoluminescent pigments, and
- The introduction of the mixture in a liquid state into the recess of the first profile element, wherein the mixture cures in the seat by crosslinking with the walls in the profile.

2. The method according to claim 1, **characterized in that** the viscosity of the silicone material is less than 9.5 Pa.s [20°C], and the average particle size of the pigments is less than 150 µm, and the percentage of the pigments in the mixture is 50 - 90% by weight.

3. The method according to claim 1 or 2, **characterized in that** the mixture to be introduced into the recess is poured.

4. The method according to one of claim to 1 to 3, **characterized in that** after the mixture is cured, the luminous layer is covered by connecting the first and second profile elements.

5. The method according to one of claims 1 to 4, **characterized in that** the first and second profile element are integrally connected and/or form-fittingly connected to each other.

6. The method according to one of claims 1 to 5, characterizing the inner walls in the first profile element are subject to a surface treatment before the mixture is introduced into the recess.

7. The method according to claim 6, **characterized in that** a flame treatment is performed as the surface treatment.

8. The method according to one of claims 1 to 7, **characterized in that** the first and second profile elements are welded by a stationary laser.

9. An escape route marking for an airplane with a luminous layer that luminesces in the dark, and a profile having two profile elements that can be connected to each other, wherein the luminous layer is arranged in a recess of the first profile element, **characterized in that** the luminous layer consists of a silicone material with photoluminescent pigments and is integrally connected to the first profile element, and the second profile element is provided to be connected to a base.

10. The escape route marking according to claim 9, **characterized in that** the first profile element consists of a transparent plastic material.

11. The escape route marking according to claim 9 or 10, **characterized in that** the first profile element has a recess extending in a longitudinal direction that is delimited by two parallel side bars (16).

12. The escape route marking according to one of claims 9 to 11, **characterized in that** the second profile element also has a recess extending in a longitudinal direction into which the luminous layer connected to the first profile element extends when the first and second profile elements are connected to each other.

## Revendications

1. Procédé de fabrication d'un marquage d'issue de secours pour un avion avec une couche luminescente qui continue à briller dans l'obscurité et un profilé qui présente deux éléments de profilé pouvant être raccordés l'un à l'autre, la couche luminescente étant, dans un premier des deux éléments de profilé, disposée dans un creux qui s'étend dans le sens longitudinal, et le deuxième élément de profilé étant prévu pour un raccordement à un substrat, le procédé comprenant les étapes suivantes :
- fabrication de la couche luminescente à partir d'un mélange d'un matériau de silicium et de pigments photoluminescents, et
- mise en place du mélange dans un état liquide dans le creux du premier élément de profilé, le mélange durcissant dans le logement et ce durcissement étant accompagné d'une réticulation avec les parois dans le profilé.

2. Procédé selon la revendication 1, **caractérisé en ce que** la viscosité du matériau de silicium est inférieure à 9,5 Pa.s [20° C], et la taille de grains moyenne des pigments est inférieure à 150 µm, et **en ce que** la proportion des pigments est de 50 - 90 %-poids dans le mélange.

3. Procédé selon la revendication 1 ou 2, **caractérisé en ce que** le mélange est coulé pour la mise en place dans le creux.

4. Procédé selon une des revendications 1 à 3, **caractérisé en ce que**, après le durcissement du mélange, la couche luminescente est recouverte par le raccordement du premier et du deuxième élément de profilé.

5. Procédé selon une des revendications 1 à 4, **caractérisé en ce que** le premier et le deuxième élément de profilé sont raccordés l'un à l'autre par liaison de matière et/ou par liaison de forme.

6. Procédé selon une des revendications 1 à 5, **caractérisé en ce que** les parois intérieures dans le premier élément de profilé sont soumises à un traitement de surface avant que le mélange soit mis en place dans le creux.

7. Procédé selon la revendication 6, **caractérisé en ce que**, en tant que traitement de surface, il est effectué un traitement à la flamme.

8. Procédé selon une des revendications 1 à 7, **caractérisé en ce que** le premier et le deuxième élément de profilé sont soudés par un laser stationnaire.

9. Marquage d'issue de secours pour un avion avec une couche luminescente qui continue à briller dans l'obscurité et un profilé qui présente deux éléments de profilé pouvant être raccordés l'un à l'autre, la couche luminescente étant disposée dans un creux du premier élément de profilé, **caractérisé en ce que** la couche luminescente est constituée d'un matériau de silicium avec des pigments photoluminescents et est raccordée par liaison de matière avec le premier élément de profilé, et **en ce que** le deuxième élément de profilé est prévu pour un raccordement à un substrat.

10. Marquage d'issue de secours selon la revendication 9, **caractérisé en ce que** le premier élément de profilé est constitué d'une matière plastique transparente.

11. Marquage d'issue de secours selon la revendication 9 ou 10, **caractérisé en ce que** le premier élément de profilé présente un creux qui s'étend dans la direction longitudinale et qui est limité par deux entretoises (16) latérales parallèles entre elles.

12. Marquage d'issue de secours selon une des revendications 9 à 11, **caractérisé en ce que** le deuxième élément de profilé présente lui aussi un creux qui s'étend dans la direction longitudinale et dans lequel plonge la couche luminescente raccordée au premier élément de profilé quand le premier et le deuxième élément de profilé sont raccordés l'un à l'autre.
